# EUROPEAN PATENT APPLICATION

(11) **EP 4 539 237 A1**
(43) Date of publication of application: **16.04.2025**
(21) Application number: 24792959.9
(22) Date of filing: 15.04.2024
(51) Int. Cl.: H01M 50/446, H01M 50/434, H01M 50/443, H01M 50/42, H01M 50/426, H01M 50/489, H01M 10/052

(54) **SELF-SUPPORTING CERAMIC SEPARATOR FOR ELECTROCHEMICAL DEVICE AND ELECTROCHEMICAL DEVICE COMPRISING SAME**

(30) Priority: 19.04.2023 KR 20230051554
(71) Applicant: LG Energy Solution, Ltd., Seoul 07335 (KR)
(72) Inventor: KIM, Yeong Ha, Daejeon 34122 (KR); JEONG, So Mi, Daejeon 34122 (KR); YOON, Yeo Ju, Daejeon 34122 (KR); KIM, Seong Jun, Daejeon 34122 (KR); BANG, Ji Hyun, Daejeon 34122 (KR)
(74) Representative: Hoffmann Eitle
(86) International application number: PCT/KR2024/005029
(87) International publication number: WO 2024/219773

(57) **Abstract**

The present disclosure relates to a self-standing ceramic separator for an electrochemical device and an electrochemical device including the same, and particularly, to a self-standing ceramic separator for an electrochemical device, which improves heat resistance of the separator by properly adjusting a content and arrangement of first inorganic matter particles having a sheet shape and second inorganic matter particles, that is, a zeolite-based inorganic matter, improves the safety of a battery by preventing an electrical short-circuit between electrodes, and shows a high cell lifespan characteristic, and an electrochemical device including the same.

## Description

### Technical Field

The present invention claims the benefit of Korean Patent Application No. 10-2023-0051554 filed in the Korean Intellectual Property Office on April 19, 2023, the entire contents of which are incorporated herein by reference.

The present disclosure relates to a self-standing ceramic separator for an electrochemical device and an electrochemical device including the same, and particularly, to a self-standing ceramic separator for an electrochemical device, which has improved heat resistance and exhibits a high cell lifespan characteristic by including first inorganic matter particles and second inorganic matter particles, and an electrochemical device including the same.

### Background Art

Among components of an electrochemical device, a separator includes a polymer substrate having a porous structure that is disposed between a positive electrode and a negative electrode, and plays a role to separate the positive electrode and the negative electrode, to prevent an electrical short-circuit between the two electrodes, and to transmit an electrolyte and ions. The separator itself does not participate in an electrochemical reaction, but physical properties of the separator, such as wettability for the electrolyte, a degree of porosity, and a thermal shrinkage ratio, affect performance and safety of the electrochemical device.

Accordingly, in order to enhance the physical properties of the separator, various methods for changing the physical properties of a coating layer by adding the coating layer to the porous polymer substrate and adding various materials to the coating layer are attempted. For example, in order to improve mechanical strength of the separator, an inorganic matter may be added to the coating layer, or an inorganic matter or hydrate for improving flame resistance and heat resistance of a polymer substrate may be added to the coating layer.

The separator may be bonded to the electrode through a lamination process, in order to secure bonding strength between the electrode and the separator, a polymer binder may be added to a coating layer composition of the separator.

Meanwhile, polyolefin-based resin that is widely used as a porous polymer substrate for an electrochemical device has problems in that an electrical short-circuit between two electrodes occurs because a positive electrode and a negative electrode come into contact with each other due the contraction of the polyolefin-based resin when the polyolefin-based resin is exposed to a high temperature and thermal runaway occurs due to a decomposition reaction of an electrolyte and an active material due to the generation of heat.

Accordingly, it is necessary to research a self-standing ceramic separator capable of improving heat resistance and durability by properly combining inorganic matter particles without polyolefin-based resin, that is, a porous polymer substrate, and can improve the safety of a battery and a battery lifespan characteristic by preventing an electrical short-circuit between electrodes.

### DISCLOSURE

### Technical Problem

A technical object to be achieved by the present disclosure is to provide a self-standing ceramic separator for an electrochemical device, which includes first inorganic matter particles capable of preventing transition metal that has been eluted from a positive electrode from transferring to a surface that faces a negative electrode by forming a dense stacking structure having a sheet shape and second inorganic matter particles having a high specific surface area and capable of adsorbing a gas and transition metal, can improve heat resistance and durability through a construction not including a porous polymer substrate, and can improve the stability of a battery and a battery lifespan characteristic, and an electrochemical device including the same.

However, objects to be achieved by the present disclosure are not limited to the aforementioned object, and the other objects not described above may be evidently understood from the following description by those skilled in the art.

### Technical Solution

An embodiment of the present disclosure provides a self-standing ceramic separator for an electrochemical device, including first inorganic matter particles, second inorganic matter particles, and a polymer binder, wherein the first inorganic matter particles have a sheet shape, and an aspect ratio of the first inorganic matter particles is 10 or more and 300 or less.

According to an embodiment of the present disclosure, one surface of the first inorganic matter particles and one surface of the separator may be arranged to face each other.

According to an embodiment of the present disclosure, a first layer in which a weight of the first inorganic matter particles as comprised is greater than a weight of the second inorganic matter particles as comprised and a second layer which is provided on one surface of the first layer and in which the weight of the second inorganic matter particles as comprised is greater than the weight of the first inorganic matter particles as comprised may be further included.

According to an embodiment of the present disclosure, a surface that is opposite to the one surface of the first layer may be provided to face a negative electrode.

According to an embodiment of the present disclosure, the first inorganic matter particles may include one selected from a group consisting of boron nitride, boehmite, kaoline, and a combination of them.

According to an embodiment of the present disclosure, the second inorganic matter particle may be a zeolite-based inorganic matter. The second inorganic matter particle may include a pore having a diameter of 0.5 nm or more to 0.9 nm or less. The pore of the second inorganic matter particle may be substituted with metal ions.

According to an embodiment of the present disclosure, an average particle diameter D50 of the second inorganic matter particles may be 1 *µ*m or less.

According to an embodiment of the present disclosure, the thickness of the second layer may be 1 µm or more to 3 µm or less.

According to an embodiment of the present disclosure, a content of the first inorganic matter particles may be 5 parts by weight or more to 10 parts by weight or less with respect to 100 parts by weight of the separator.

According to an embodiment of the present disclosure, the polymer binder may be an acrylic binder, a polyvinylidene-based binder, or a combination of them.

According to an embodiment of the present disclosure, the thickness of the separator may be 7 µm or more to 15 µm or less.

According to an embodiment of the present disclosure, the permeability of the separator may be 170 sec/100 cc or less.

According to an embodiment of the present disclosure, resistance of the separator may be 0.6 Ω or more to 1.2 Ω or less.

An embodiment of the present disclosure provides an electrochemical device including a positive electrode; a negative electrode; and a separator interposed between the positive electrode and the negative electrode.

### Advantageous Effects

The self-standing ceramic separator for an electrochemical device according to an embodiment of the present disclosure can be suppressed from being thermally contracted at a high temperature.

The self-standing ceramic separator for an electrochemical device according to an embodiment of the present disclosure can improve the stability of a battery and a battery lifespan characteristic by preventing transition metal that has been eluted from the positive electrode from transferring to the surface that faces the negative electrode.

### Brief Description of Drawings

FIG. 1 is a schematic diagram of a self-standing ceramic separator for an electrochemical device according to an embodiment of the present disclosure.
FIG. 2 is a schematic diagram of an electrochemical device according to an embodiment of the present disclosure.

### Best Mode

In this specification, when it is said that a part "includes" a component, it means that another component is not excluded, but another component may be further included, unless explicitly described to the contrary.

In this specification, "A and/or B" means "A and B, or A or B".

In this specification, when it is said that one component is provided "on" the other component, it means that another component may be further disposed without excluding that another component is disposed between the two components, unless explicitly described to the contrary.

In this specification, a characteristic "having a pore" means that a fluid having a gas and/or liquid state can pass from one side of a target to the other side due to a structure in which pores have been mutually connected because the target includes a plurality of pores.

In this specification, a separator has a porous characteristic including multiple pores, and plays a role as an ion-conducting barrier which transmits ions while blocking an electrical contact between a negative electrode and a positive electrode in an electrochemical device.

Hereinafter, the present disclosure is described more specifically.

An embodiment of the present disclosure provides a self-standing ceramic separator for an electrochemical device, including first inorganic matter particles, second inorganic matter particles, and a polymer binder, wherein the first inorganic matter particles have a sheet shape, and the aspect ratio of the first inorganic matter particles is 10 or more and 300 or less.

The self-standing ceramic separator for an electrochemical device according to an embodiment of the present disclosure can suppress thermal contraction at a high temperature. Furthermore, the self-standing ceramic separator for an electrochemical device according to an embodiment of the present disclosure can improve the stability of a battery and a battery lifespan characteristic by preventing transition metal that has been eluted from a positive electrode from transferring to a surface that faces a negative electrode.

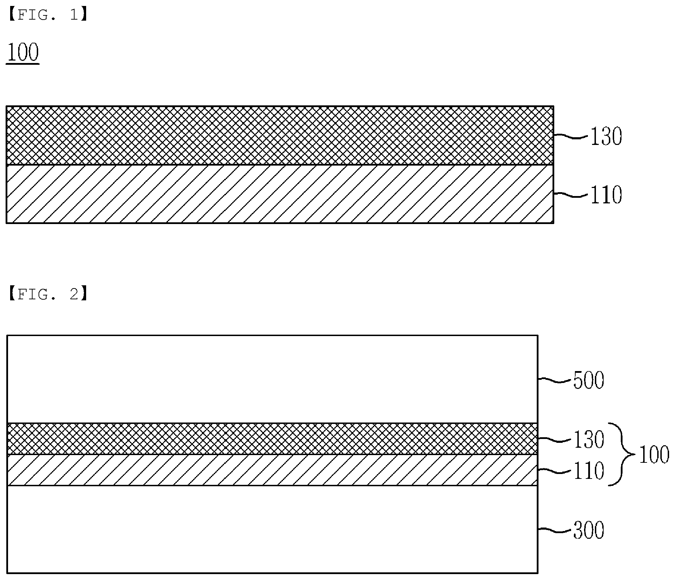

FIG. 1 is a schematic diagram of a self-standing ceramic separator for an electrochemical device according to an embodiment of the present disclosure. The self-standing ceramic separator for an electrochemical device, that is, an embodiment of the present disclosure, is described in detail with reference to FIG. 1. FIG. 2 is a schematic diagram of an electrochemical device according to an embodiment of the present disclosure. The electrochemical device, that is, an embodiment of the present disclosure, is described in detail with reference to FIG. 2.

According to an embodiment of the present disclosure, a self-standing ceramic separator 100 for an electrochemical device does not include a porous polymer substrate. Since the self-standing ceramic separator for an electrochemical device does not include the porous polymer substrate, heat resistance of the separator can be improved and an electrical short-circuit can be prevented from occurring in an electrode due to the contraction of the separator at a high temperature.

According to an embodiment of the present disclosure, the separator 100 includes first inorganic matter particles, second inorganic matter particles, and a polymer binder. Since the separator includes the first inorganic matter particles, the second inorganic matter particles, and the polymer binder as described above, heat resistance of the separator can be improved and an electrical short-circuit can be prevented from occurring in an electrode due to the contraction of the separator at a high temperature. Moreover, a pore may be formed within the separator.

According to an embodiment of the present disclosure, the separator 100 may include a plurality of pores. Specifically, the separator may be a porous separator including a plurality of pores therein. Since the separator includes the plurality of pores as described above, a physical contact between a negative electrode and a positive electrode can be blocked, and a current can flow through the separator because lithium ions pass through the separator.

According to an embodiment of the present disclosure, the separator 100 may be formed in a manner where the inorganic matter particles are bonded by the polymer binder and the inorganic matter particles are integrated within a side thereof. The pore within the separator may be caused from an interstitial volume, that is, an empty space between the inorganic matter particles. Specifically, as described later, the structure and size of the pore may be different depending on a difference in the shape and combination of the first inorganic matter particles and the second inorganic matter particles. Moreover, transition metal that has been eluted from a positive electrode can be prevented from transferring to the surface that faces a negative electrode due to a difference in the structure and size of the pore.

According to an embodiment of the present disclosure, the inorganic matter particles may include the first inorganic matter particles and the second inorganic matter particles. Non-limitative examples of the inorganic matter particles may include BaTiO₃, Pb(Zr,Ti)O₃(PZT), Pb₁₋ₓLaₓZr_{1-y}Ti_{y}O₃(PLZT, 0<x<1, 0<y<1), Pb (Mg_{1/3}Nb_{2/3})O₃-PbTiO₃(PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, SiC, Al(OH)₃, TiO₂, aluminum peroxide, zinc tin hydroxide (ZnSn(OH)₆), tin-zinc oxide (Zn₂SnO₄, ZnSnO₃), antimony trioxide (Sb₂O₃), antimony tetroxide (Sb₂O₄), antimony penta-oxide (Sb₂O₅), zeolite A, zeolite X, zeolite Y, etc., and the inorganic matter particles may include one or two or more of them. Meanwhile, the inorganic matter particles may include one or more inorganic matter particles having a sheet shape, among boron nitride (BN), boehmite, and kaoline, in addition to the examples.

According to an embodiment of the present disclosure, the first inorganic matter particles have a sheet shape. Since the first inorganic matter particles have the sheet shape as described above, a dense stacking structure can be formed, so that the durability of the separator can be improved .

According to an embodiment of the present disclosure, the aspect ratio of the first inorganic matter particles is 10 or more and 300 or less. As described above, the first inorganic matter particles are the inorganic matter particles having a sheet shape, and the aspect ratio thereof may be 10 or more and 300 or less. More specifically, the first inorganic matter particles are the inorganic matter particles having a sheet shape, and the aspect ratio thereof may be 20 or more to 290 or less, 30 or more to 280 or less, 40 or more to 270 or less, 50 or more to 260 or less, 60 or more to 250 or less, 70 or more to 240 or less, 80 or more to 230 or less, 90 or more to 220 or less, 100 or more to 210 or less, 110 or more to 200 or less, 120 or more to 190 or less, 130 or more to 180 or less, 140 or more to 170 or less, or 150 or more to 160 or less. In this specification, the aspect ratio may be defined as [a length in a long axis direction]/[the width in a direction orthogonal to the long axis direction] of the inorganic matter particles having a sheet shape. By adjusting the aspect ratio of the first inorganic matter particles in the aforementioned range, the thickness of a coating layer can be thinly implemented, and the durability of the separator can be improved because a dense stacking structure can be formed.

According to an embodiment of the present disclosure, one surface of the first inorganic matter particles and one surface of the separator may be arranged to face each other. As described above, the first inorganic matter particles are the inorganic matter particles having a sheet shape, and have a long shape in the long axis direction thereof. Accordingly, the durability of the separator can be improved because the long axis direction is arranged to face one surface of the separator to form a dense stacking structure. Furthermore, transition metal that has been eluted from a positive electrode can be suppressed from transferring to the surface that faces the negative electrode because a pore structure is complexly formed.

According to an embodiment of the present disclosure, a first layer 110 in which a weight of the first inorganic matter particles as comprised is greater than a weight of the second inorganic matter particles as comprised; and a second layer 130 which is provided on one surface of the first layer and in which the weight of the second inorganic matter particles as comprised is greater than the weight of the first inorganic matter particles as comprised may be included. Specifically, the first inorganic matter particles and the second inorganic matter particles may be mixed in the first layer and the second layer, but the first layer having a heavier weight of the first inorganic matter particles and the second layer having a heavier weight of the second inorganic matter particles may be separately stacked. Since the first layer and the second layer are separately stacked as described above, the second layer can adsorb a gas and transition metal, and the first layer can suppress the occurrence of a battery short-circuit by preventing transition metal that has been adsorbed by the second layer from transferring to the surface that faces the negative electrode.

According to an embodiment of the present disclosure, a surface that is opposite to the one surface of the first layer may be provided to face a negative electrode 300. FIG. 2 is a schematic diagram of an electrochemical device according to an embodiment of the present disclosure. Referring to FIG. 2, the first layer including an excessive amount of the first inorganic matter particles or including only the first inorganic matter particles may be formed by combining into contact with the negative electrode. As described above, the second layer is provided on one surface of the first layer, and a surface that is opposite to the one surface of the first layer is provided to face the negative electrode. Accordingly, the first layer can suppress the occurrence of a battery short-circuit by preventing transition metal that has been eluted from a positive electrode from transferring to the surface that faces the negative electrode if the transition metal passes through the second layer without being adsorbed by the second layer.

According to an embodiment of the present disclosure, the first inorganic matter particles may include one selected from a group consisting of boron nitride, boehmite, kaoline, and a combination of them. As described above, the first inorganic matter particles may be the inorganic matter particles having a sheet shape. Specifically, since the first inorganic matter particles include boron nitride (BN) having a hexagonal crystal structure, boehmite (AlOOH) having a hexagonal crystal structure, and clay powder having a sheet shape, such as kaoline (Al₂O₃.2SiO₂.2H₂O), the first layer having a heavier weight of the first inorganic matter particles may be arranged to face one surface of the separator to form a dense stacking structure. Moreover, since a pore structure that is formed between the inorganic matter particles having a sheet shape through the dense stacking structure is complexly formed, transition metal that has been eluted from the positive electrode can be suppressed from transferring to the surface that faces the negative electrode through the separator.

According to an embodiment of the present disclosure, the second inorganic matter particles may be a zeolite-based inorganic matter. Specifically, the zeolite-based inorganic matter may include one selected from a group consisting of zeolite A, zeolite X, zeolite Y, zeolite L, ZSM-5, beta-zeolite, ZSM-8, ZSM-11, and a combination of them. The zeolite-based inorganic matter may have a high specific surface area. Preferably, the zeolite-based inorganic matter may be zeolite Y. The ability to adsorb a gas and transition metal can be improved because the zeolite-based inorganic matter is used as the second inorganic matter particles as described above.

According to an embodiment of the present disclosure, the second inorganic matter particle may include a pore having a diameter of 0.5 nm or more to 0.9 nm or less. Specifically, the second inorganic matter particle includes a space within the particle, and the diameter of the internal space may be 0.5 nm or more to 0.9 nm or less. Moreover, the diameter of the pore may mean the longest length, among the lengths of two points at which a straight line that passes through the inside of the pore meets a surface of the pore. More specifically, the pore of the second inorganic matter particle may have a diameter of 0.55 nm or more to 0.85 nm or less, 0.6 nm or more to 0.8 nm or less, or 0.65 nm or more to 0.75 nm or less. By adjusting the diameter of the pore in the aforementioned range, the ability to adsorb a gas that is generated from a lithium ion battery, such as carbon monooxide (CO) or carbon dioxide (CO₂), can be improved.

According to an embodiment of the present disclosure, the pore of the second inorganic matter particle may be substituted with metal ions. Specifically, the metal ion may be a metal ion having the same electro negativity as a lithium ion or lower electro negativity than a lithium ion. More specifically, the metal ion may be an alkali metal ion. Preferably, the metal ion may be one selected from a group consisting of lithium (Li), sodium (Na), potassium (K), rubidium (Rb), cesium (Cs), and a combination of them. By substituting the metal ions selected from the group into the pore of the second inorganic matter particles, the electrical conductivity of a battery can be maintained because an excessive amount of manganese ions included in the positive electrode active material are adsorbed and the substituted lithium ions are eluted by an electrolyte. Furthermore, lithium dendrite that is generated because manganese, that is, transition metal that moves from the positive electrode to the negative electrode, is accumulated on the negative electrode can be reduced.

According to an embodiment of the present disclosure, an average particle diameter D50 of the second inorganic matter particles may be 0.3 µm or more to 1 µm or less. Specifically, the average grain diameter D50 of the second inorganic matter particles may be 0.4 µm or more to 0.9 µm or less, 0.5 µm or more to 0.8 µm or less, or 0.6 µm or more to 0.7 µm or less. By adjusting the average particle diameter D50 of the second inorganic matter particles in the aforementioned range, a phase separation speed and phase separation efficiency between a polymer binder and the second inorganic matter particles can be improved in slurry for the coating layer, that is, emulsion in which the polymer binder has been dispersed in water. Moreover, when the average particle diameter is less than 0.3 µm, the dispersibility of the second inorganic matter particles may be degraded in slurry that has been prepared for the manufacturing of the separator. When he the average particle diameter is greater than 1 µm, the thickness of a separator that is formed may be increased.

In this specification, the "D50 particle diameter" means a particle diameter at a point 50% of a particle number accumulation distribution according to a particle diameter. The particle diameter may be measured by using a laser diffraction method. Specifically, after measurement target powder is dispersed in a dispersion medium, the powder is introduced into a commercial laser diffraction particle size measuring apparatus (e.g., Microtrac S3500). A distribution of the sizes of particles is calculated by measuring a difference between diffraction patterns according to the sizes of the particles when the particles pass through a laser beam. The D50 particle diameter may be measured by calculating the diameter of the particle at a point at which the particle number accumulation distribution according to the particle diameter becomes 50% in the measuring apparatus.

According to an embodiment of the present disclosure, the inorganic matter particles which may be used in the separator may be electrochemically stable. That is, the inorganic matter particles which may be used in an embodiment of the present disclosure may not generate an oxidation and/or reduction reaction in an operating voltage range (e.g., 0 V to 5 V on the basis of Li/Li⁺) of an applied electrochemical device.

According to an embodiment of the present disclosure, the thickness of the second layer may be 1 µm or more to 3 µm or less. Specifically, the thickness of the second layer may be 1.1 µm or more to 2.9 µm or less, 1.2 µm or more to 2.8 µm or less, 1.3 µm or more to 2.7 µm or less, 1.4 µm or more to 2.6 µm or less, 1.5 µm or more to 2.5 µm or less, 1.6 µm or more to 2.4 µm or less, 1.7 µm or more to 2.3 µm or less, 1.8 µm or more to 2.2 µm or less, or 1.9 µm or more to 2.1 µm or less. The thickness of the second layer may be adjusted in the aforementioned range because the average particle diameter D50 of the second inorganic matter particles that constitute the second layer is 1 µm or less as described above.

According to an embodiment of the present disclosure, a content of the first inorganic matter particles may be 5 parts by weight or more to 10 parts by weight or less with respect to 100 parts by weight of the separator. Specifically, the content of the first inorganic matter particles may be 6 parts by weight or more to 9 parts by weight or less, or 7 parts by weight or more to 8 parts by weight or less with respect to 100 parts by weight of the separator. By adjusting the content of the first inorganic matter particles in the aforementioned range, heat resistance of the separator can be improved, and the durability of the coating layer can be improved.

According to an embodiment of the present disclosure, the content of the second inorganic matter particles may be 5 parts by weight or more to 10 parts by weight or less with respect to 100 parts by weight of the separator. Specifically, the content of the second inorganic matter particles may be 6 parts by weight or more to 9 parts by weight or less, or 7 parts by weight or more to 8 parts by weight or less with respect to 100 parts by weight of the separator. By adjusting the content of the second inorganic matter particles in the aforementioned range, heat resistance of the separator can be improved, and the adsorption rate of gas and transition metal can be improved.

According to an embodiment of the present disclosure, a content of the polymer binder may be 5 parts by weight or more to 10 parts by weight or less with respect to 100 parts by weight of the separator. Specifically, the content of the polymer binder may be 6 parts by weight or more to 9 parts by weight or less, or 7 parts by weight or more to 8 parts by weight or less with respect to 100 parts by weight of the separator. By adjusting the content of the polymer binder in the aforementioned range, the porosity of the separator can be maintained, and bonding strength can be maintained even if the coating layer becomes wet by an electrolyte after the activation of a battery.

According to an embodiment of the present disclosure, the polymer binder may have a particle type or a non-particle type. Specifically, as described later, the polymer binder may maintain a particle shape without being dissolved by a dispersion medium or a solvent. The polymer binder may be dissolved by a dispersion medium or a solvent, and may not maintain a particle shape. By selecting the polymer binder having the particle type or the non-particle type as described above, mechanical properties and the porosity of the coating layer may be adjusted.

According to an embodiment of the present disclosure, the average particle diameter D50 of the particle type polymer binder may be 1.0 µm or less. Specifically, the average particle diameter D50 of the particle type polymer binder may be 0.10 µm or more to 0.90 µm or less, 0.15 µm or more to 0.85 µm or less, 0.20 µm or more to 0.70 µm or less, 0.25 µm or more to 0.65 µm or less, 0.30 µm or more to 0.60 µm or less, 0.35 mm or more to 0.55 µm or less, or 0.40 µm or more to 0.50 µm or less. By adjusting the average particle diameter D50 of the particle type polymer binder in the aforementioned range, a phase separation speed and phase separation efficiency between the particle type polymer binder and the inorganic matter particles can be improved in inorganic matter slurry, that is, an emulsion in which the particle type polymer binder has been dispersed in water.

According to an embodiment of the present disclosure, the polymer binder may be an acrylic binder, a polyvinylidene-based binder, or a combination of them.

According to an embodiment of the present disclosure, the polymer binder may include two or more types of polymer binders. Bonding strength of the separator can be improved, the porosity of the separator can be improved, and both dry bonding strength before the state in which an electrolyte is injected and wet bonding strength after the electrolyte is injected can be improved because the polymer binder includes the two or more types of the polymer binders as described above.

According to an embodiment of the present disclosure, the polymer binder may include an acrylic binder. By using the acrylic binder, the porosity of the separator can be maintained, the ease of the manufacturing of a battery can be improved, and a stacking process can be stably implemented because bonding strength of the electrode and the separator is improved in a lamination process of the battery.

According to an embodiment of the present disclosure, the acrylic binder may be a polymer in which (meth)acrylic acid ester is included as a repetition unit, and may be preferably (meth)acrylic ester or an acryl-styrene copolymer.

According to an embodiment of the present disclosure, detailed examples of the (meth) acrylic ester may include methyl (meth)acrylate, ethyl (meth)acrylate, n-propyl (meth)acrylate, i-propyl (meth)acrylate, n-butyl (meth)acrylate, i-butyl (meth)acrylate, n-amyl (meth)acrylate, i-amyl (meth)acrylate, hexyl (meth)acrylate, cyclohexyl (meth)acrylate, 2-ethylhexyl (meth)acrylate, n-octyl (meth)acrylate, nonyl (meth)acylate, decyl (meth)acrylate, hydroxymethyl (meth)acrylate, hydroxyethyl (meth)acrylate, ethylene glycol (meth)acrylate, ethylene glycol di(meth)acrylate, prolylene glycol di(meth)acrylate, trimethylolpropane tri(meth)acrylate, pentaerythritol tetra (meth) acrylate, dipentaerythritol hexa (meth) acrylate, allyl (meth)acrylate, ethylene di(meth) acrylate, etc., and may be one type or more selected from among them. Among them, one type or more selected from methyl (meth)acrylate, ethyl (meth)acrylate and 2-ethylhexyl (meth)acrylate, are preferred. methyl (meth)acrylate is specially preferred.

According to an embodiment of the present disclosure, the acryl-styrene copolymer may include an acrylic binder. The acrylic binder may be polyacrylate series. For example, the binder may be one type or more selected from a group consisting of styrenebutadiene rubber, nitrile-butadiene rubber, acrylonitrile-butadiene rubber, acrylonitrile-butadiene-styrene rubber, and an acylate-based polymer, and may be particularly a copolymer including acylate.

According to an embodiment of the present disclosure, the polymer binder may include a polyvinylidene-based binder. Specifically, according to an embodiment of the present disclosure, the polyvinylidene-based binder may be a copolymer of polyvinylidene fluoride and hexafluoropropylene. By selecting the polymer binder being the polyvinylidene-based binder as described above, the porosity of the separator can be maintained, and bonding strength can be maintained even if the coating layer becomes wet by an electrolyte after the activation of a battery. Moreover, the stiffness of a battery can be improved, and the bending of the separator can be prevented.

According to an embodiment of the present disclosure, the polyvinylidene-based binder may be an aqueous binder. Specifically, by selecting the polyvinylidene-based binder being the aqueous binder, a cost for manufacturing a battery can be reduced by minimizing pollution materials that are discharged in a manufacturing process of the separator.

According to an embodiment of the present disclosure, the polyvinylidene-based binder may be a polyvinylidene-based binder in which a content of hexafluoropropylene is 1 wt% or more to 50 wt% or less. By selecting the polyvinylidene-based binder in which the content of hexafluoropropylene is 1 wt% or more to 50 wt% or less as the second polymer binder particles as described above, the porosity of the separator can be maintained, and bonding strength can be maintained even if the coating layer becomes wet by an electrolyte after the activation of a battery.

According to an embodiment of the present disclosure, the thickness of the separator may be 7 µm or more to 15 µm or less, but the present disclosure is not specially limited thereto. Specifically, the thickness of the separator may be 8 µm or more to 14 µm or less, 9 µm or more to 13 µm or less, or 10 µm or more to 12 µm or less. Those skilled in the art may adjust the thickness in a proper range in terms of heat resistance or electrical resistance. As described above, the first inorganic matter particles that have the sheet shape and that constitute the separator are arranged to face one surface of the separator to form a dense stacking structure, and the average particle diameter D50 of the second inorganic matter particles is 1 µm or less. Accordingly, the thickness of the separator can be adjusted in a proper range within the aforementioned range.

According to an embodiment of the present disclosure, the thickness of the second layer and/or the separator may be measured by applying a contact type thickness measuring instrument. For example, VL-50S-B of Mitutoyo Corporation may be used as the contact type thickness measuring instrument.

According to an embodiment of the present disclosure, the permeability of the separator may be 170 sec/100 cc or less. Specifically, the permeability of the separator may be 100 sec/100 cc or more to 170 sec/100cc or less, 110 sec/100 cc or more to 160 sec/100cc or less, 120 sec/100 cc or more to 150 sec/100 cc or less, or 130 sec/100 cc or more to 140 sec/100 cc or less. The permeability may be excellent because the inorganic matter particles have the sheet shape or the average particle diameter D50 is small as described above.

According to an embodiment of the present disclosure, resistance of the separator may be 0.6 Ω or more to 1.2 Ω or less. Specifically, resistance of the separator may be 0.7 Ω or more to 1.1 Ω or less, or 0.8 Ω or more to 1.0 Ω or less. It is considered that a resistance value of the separator is small because the inorganic matter particles have the sheet shape or the average particle diameter D50 is small as described above.

According to an embodiment of the present disclosure, the breakdown voltage of the separator may be 3700 V or more. Specifically, the breakdown voltage of the separator may be 3700 V or more to 5000 V or less, 3800 V or more to 4900 V or less, 3900 V or more to 4800 V or less, 4000 V or more to 4700 V or less, 4100 V or more to 4600 V or less, 4200 V or more to 4500 V or less, or 4300 V or more to 4400 V or less. It may be seen that the breakdown voltage of the separator is high and withstand voltage characteristics are excellent because the inorganic matter particles have the sheet shape or the average particle diameter D50 is small as described above.

According to an embodiment of the present disclosure, the porosity of the separator may be 30 vol% or more. Specifically, the porosity of the separator may be 30 vol% or more to 70 vol% or less, 32 vol% or more to 68 vol% or less, 34 vol% or more to 66 vol% or less, 36 vol% or more to 64 vol% or less, 38 vol% or more to 62 vol% or less, 40 vol% or more to 60 vol% or less, 42 vol% or more to 58 vol% or less, 44 vol% or more to 56 vol% or less, 46 vol% or more to 54 vol% or less, or 48 vol% or more to 52 vol% or less. By adjusting the porosity of the separator in the aforementioned range, a movement of ions in the separator can be maintained, and a rise of resistance of the separator can be prevented. Specifically, when the porosity is 70 vol% or less, a mechanical characteristic which can withstand a press process for bonding to an electrode can be secured. Furthermore, it is suitable for securing bonding strength because a surface aperture ratio does not become too high. Meanwhile, when the porosity is 30 vol% or more, it is advantageous in terms of ion penetrability.

In this specification, the "porosity" means the ratio of a volume that is occupied by a pore with respect to the entire volume. vol% is used as a unit of the porosity. The porosity may be interchangeably used with a term, such as an air void or a pore diameter

In this specification, the porosity corresponds to a value that is obtained by subtracting a volume converted from the weight and density of each constituent component of the separator, from a volume that is calculated in the thickness, width, and height of the separator.

In an embodiment of the present disclosure, the porosity and pore size of the separator may be measured by a BET 6-point method by a nitrogen gas adsorption and distribution method by using a scanning electronic microscopy (SEM) image, a mercury porosimeter, a capillary flow porometer, or a porosimetry analyzer (Bell Japan Inc, Belsorp-II mini). In this case, it may be advantageous to use the capillary flow porometer.

According to an embodiment of the present disclosure, a method of forming the separator is as follows, for example. First, a polymer solution or polymer emulsion in which a polymer binder has been dissolved in a proper solvent or dispersed in a dispersion medium is manufactured. It is preferred that the solvent or the dispersion medium has a solubility index similar to that of the polymer binder to be used and has a low boiling point. This is for uniform mixing and the easy removal of the solvent or the dispersion medium thereafter. Non-limitative examples of a solvent or dispersion medium which may be used include acetone, tetrahydrofuran, methylene chloride, chloroform, dimethylformamide, N-methyl-2-pyrrolidone (NMP), cyclohexane, water, or a mixture of them.

Next, first inorganic matter slurry is manufactured by adding first inorganic matter particles to the first polymer solution or the first polymer emulsion that has been manufactured and dispersing them. According to an embodiment of the present disclosure, the content ratio of the first inorganic matter particles and the polymer binder is the same as that described above, and may be properly adjusted by considering the thickness, pore size, and porosity of a separator according to the present disclosure, which is finally manufactured.

Next, the first inorganic matter slurry that has been manufactured is applied to at least one side of a prepared PET release film and dried. A method of applying the first inorganic matter slurry to a surface of the PET release film is not specially limited to any one method, and a common method that is known in the industry may be used. For example, various methods, such as dip coating, die coating, roll coating, comma coating, or a mixed method of them, may be used.

Next, second inorganic matter slurry is manufactured by adding second inorganic matter particles to a second polymer solution or second polymer emulsion that is manufactured by using the method and dispersing them. According to an embodiment of the present disclosure, the content ratio of the second inorganic matter particles and the polymer binder is the same as that described above, and may be properly adjusted by considering the thickness, pore size, and porosity of the separator according to the present disclosure, which is finally manufactured.

Next, the second inorganic matter slurry that has been manufactured is applied on a first layer including the first inorganic matter particles that have been applied and dried. A method of applying the second inorganic matter slurry to a surface of the first layer is not specially limited to any one method, and a common method that is known in the industry may be used. For example, various methods, such as dip coating, die coating, roll coating, comma coating, or a mixed method of them, may be used.

In the dry process, temperature and time conditions are properly set so that the occurrence of a surface defect in the separator can be minimized. For the dry, a dry-assistant apparatus, such as a dry oven or hot air, may be used within a proper range.

After the dry process, the separator may be manufactured by removing the PET release film.

According to an embodiment of the present disclosure, a polymer emulsion may be manufactured to include the first and/or second inorganic matter slurry by dispersing the polymer binder, that is, the first polymer binder and the second polymer binder, in water that is a proper dispersion medium along with a humectant. The humectants is one or more of humectants having 0 to 5 parts per 100 parts of water, preferably, 0 to 3 parts, and may be present in the first and/or second inorganic matter slurry. A surfactant may be provided as the humectants, but the humectants may also include a non-surfactant. In some aspects, the humectants may be an organic solvent. If an arbitrary humectant is present, powder material(s) is uniformly distributed in an aqueous dispersion solution of a polyvinylidene-based binder. A useful humectant includes an ionic and non-ionic surfactant, for example, TRITON series (Dow Corporation) and PLURONIC series (BASF Corportion), BYK-346 (BYK Additives Corportion), and NMP, DMSO, and acetone), but is not limited thereto. The humectant includes an organic liquid that is compatible with an aqueous dispersion solution, but the present disclosure is not limited thereto. As described above, the polymer emulsion is manufactured to include the first and/or second inorganic matter slurry by dispersing the polymer binder in water, that is, a proper dispersion medium, along with the humectants. Pollution materials that are generated in the manufacturing process can be minimized.

According to an embodiment of the present disclosure, the separator 100 is interposed between the negative electrode 300 and the positive electrode 500, and is manufactured as an electrochemical device by a lamination process of settling the separator by applying heat and/or pressure. In an embodiment of the present disclosure, the lamination process may be performed by a roll process apparatus including a pair of pressurization rollers. That is, interlayer bonding may be achieved by sequentially stacking the negative electrode, the separator, and the positive electrode and inputting them between the pressurization rollers. In this case, the lamination process may be performed by a hot pressurization method.

An embodiment of the present disclosure provides an electrochemical device including the positive electrode 300; the negative electrode 500; and the separator 100 interposed between the positive electrode and the negative electrode.

The electrochemical device according to an embodiment of the present disclosure includes the separator not having a porous polymer substrate, the separator including the first inorganic matter particles that form a dense stacking structure in the sheet shape and can prevent transition metal that has been eluted from the positive electrode from transferring to the surface that faces the negative electrode, and the second inorganic matter particles that have a high specific surface area and can adsorb a gas and transition metal, so that heat resistance and durability can be improved and the stability of a battery and the battery lifespan characteristic can be improved.

In this specification, the electrochemical device is a device that converts chemical energy into electrical energy by an electrochemical reaction, and is a concept that includes a primary battery and a secondary battery. In this specification, the secondary battery is capable of being charged and discharged, and means a lithium secondary battery, a nickel cadmium battery, a nickel-hydrogen battery, etc. The lithium secondary battery uses lithium ions as an ion conductor. A nonaqueous electrolyte secondary battery including a liquid electrolyte, an all-solid-state battery including a solid electrolyte, a lithium polymer battery including a gel polymer electrolyte, a lithium metal battery using lithium metal as a negative electrode, etc. may be taken as examples of the lithium secondary battery, but the present disclosure is not limited thereto.

According to an embodiment of the present disclosure, the positive electrode includes a positive electrode current collector, and a positive electrode active material layer including a positive electrode active material, a conductive material, and binder resin on a surface of the current collector at least on one side thereof. The positive electrode active material may include a one type or a mixture of two or more types, among a layered compound, such as lithium manganese composite oxide (LiMn₂O₄, LiMnO₂, etc.), lithium cobalt oxide (LiCoO₂), or lithium nickel oxide (LiNiO₂), or a compound substituted with one or more of transition metal; lithium manganese oxide, such as Chemical Formula Li₁₊ₓMn₂₋ₓO₄ (wherein x is 0 to 0.33), LiMnO₃, LiMn₂O₃, LiMnO₂, etc.; lithium copper oxide (Li₂CuO₂); vanadium oxide, such as LiV₃O₈, LiV₃O₄, V₂O₅, Cu₂V₂O₇, etc.; Ni site-type lithium nickel oxide that is represented as Chemical Formula LiNi₁₋ₓMₓO₂ (wherein M = Co, Mn, Al, Cu, Fe, Mg, B, or Ga, and x = 0.01 to 0.3); lithium manganese composite oxide that is represented as Chemical Formula LiMn₁-xMₓO₂ (wherein M = Co, Ni, Fe, Cr, Zn, or Ta, and x = 0.01 to 0.1) or Li₂Mn₃MO₈ (wherein M = Fe, Co, Ni, Cu, or Zn); LiMn₂O₄ in which some of Li in Chemical Formula has been substituted with alkaline earth metal ions; a disulfide compound; and Fe₂(MoO₄)₃.

According to an embodiment of the present disclosure, the negative electrode includes a negative electrode current collector and a negative electrode active material layer including a negative electrode active material, a conductive material, and binder resin on a surface of the current collector at least on one side thereof. The negative electrode may include one type or a mixture of two or more types, among carbon, such as lithium metal oxide, non-graphitizable carbon, or graphite-based carbon; metal composite oxide, such as LixFe₂O₃(0≤x≤1), LiWO₂(0≤x≤1), SnₓMe₁₋ₓMe'_{y}O_{z} (Me: Mn, Fe, Pb, Ge; Me': Al, B, P, Si, Group 1, Group 2, and Group 3 elements of the periodic table, halogen; 0<x≤1; 1≤y≤3; 1≤z≤8); lithium metal; a lithium alloy; a silicon-based alloy; a tin-based alloy; metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; an Li-Co-Ni-based material; and titanium oxide, as the negative electrode active material.

According to an embodiment of the present disclosure, the conductive material may be any one selected from a group consisting of graphite, carbon black, carbon fiber, metal fiber, metal powder, conductive whisker, conductive metal oxide, activated carbon, and a polyphenylene derivative, for example, or a mixture of two or more conductive materials of them. More specifically, the conductive material may be one type selected from a group consisting of natural graphite, artificial graphite, super-p, acetylene black, ketjen black, channel black, furnace black, lamp black, thermal black, denka black, aluminum powder, nickel powder, zinc oxide, potassium titanate, and titanium oxide or a mixture of two or more conductive materials of them.

According to an embodiment of the present disclosure, the current collector is not specially limited so long as the current collector has high conductivity without causing a chemical change in a corresponding battery. For example, a current collector in which stainless steel, copper, aluminum, nickel, titan, calcined carbon, aluminum, or stainless steel has been surface-treated with carbon, nickel, titan, silver, etc. may be used.

According to an embodiment of the present disclosure, a polymer that is commonly used in an electrode in the industry may be used as the binder resin. Non-limitative examples of such binder resin may include polyvinylidene fluoride-co-hexafluoropropylene, polyvinylidene fluoride-cotrichloroethylene, polymethylmethacrylate, polyethylhexyl acrylate, polybutylacrylate, polyacrylonitrile, polyvinylpyrrolidone, polyvinylacetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, and carboxyl methyl cellulose, but the present disclosure is not limited thereto.

In the present disclosure, positive electrode slurry for manufacturing the positive electrode active material layer may include a dispersant. The dispersant may be a pyrrolidone-based compound. Specifically, the dispersant may be N-methylpyrrolidone (ADC-01, LG Chemical Corporation).

According to an embodiment of the present disclosure, a content of the dispersant included in the positive electrode slurry may be more than 0 parts by weight to 0.5 parts by weight or less with respect to 100 parts by weight of the positive electrode slurry. Specifically, the content of the dispersant included in the positive electrode slurry may be more than 0.05 parts by weight to 0.4 parts by weight or less with respect to 100 parts by weight of the positive electrode slurry.

According to an embodiment of the present disclosure, positive electrode slurry for manufacturing the negative electrode active material layer may include a dispersant. The dispersant may be a polypyrrolidone-based compound. Specifically, the dispersant may be polyvinylpyrrolidone (Junsei Chemical Co., Ltd. of Japan).

According to an embodiment of the present disclosure, the content of the dispersant included in the negative electrode slurry may be more than 0 parts by weight to 0.5 parts by weight or less with respect to 100 parts by weight of the negative electrode slurry. Specifically, the content of the dispersant included in the negative electrode slurry may be more than 0.05 parts by weight to 0.4 parts by weight or less with respect to 100 parts by weight of the negative electrode slurry.

According to an embodiment of the present disclosure, a battery may be manufactured by inserting the electrochemical device that has been prepared as described into a proper case and injecting an electrolyte.

According to an embodiment of the present disclosure, the electrolyte includes one which is obtained by dissolving or dissociating a salt having a structure such as that of A⁺B⁻, in which A⁺ includes ions composed of alkali metal positive ions, such as Li⁺, Na⁺, or K⁺, or a combination of them and B⁻ includes ions composed of negative ions, such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination of them, in an organic solvent consisting of propylene carbonate (PC), ethylene carbonate (EC), diethyl carbonate (DEC), dimethyl carbonate (DMC), dipropylcarbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), or gamma butyrolactone (γ-butyrolactone) or a mixture of them, but the present disclosure is not limited thereto only.

An embodiment of the present disclosure provides a battery module that includes a battery including the electrochemical device as a unit battery, a battery pack including the battery module, and a device including the battery pack as a power source. Detailed examples of the device may include a power tool that is moved by power from a battery motor; an electric vehicle including an electric vehicle (EV), a hybrid electric vehicle (HEV), a plug-in hybrid electric vehicle (PHEV), etc.; an electric two-wheel vehicle including an electric bicycle (E-bike) and an electric scooter (E-scooter); an electric golf cart; a system for power storage, etc., but the present disclosure is not limited thereto.

### Mode for Invention

Hereinafter, examples are described in detail in order to describe the present disclosure in detail. However, the examples according to the present disclosure may be modified in various other forms, and the scope of the present disclosure is not construed as being limited to examples described hereinafter. The examples of this specification are provided to a person having ordinary knowledge in the art to more fully describe the present disclosure.

### < Example 1>

Fluid-based slurry was prepared by inputting synthesized hexagonal boron nitride (hBN) having an aspect ratio of 50 (as first inorganic matter particles having a sheet shape) and polyacryl acid (PAA), that is, a dispersant, to NMP (N-methyl-2-pyrrolidone), that is, a solvent, and dispersing them by the sonicator for about 30 minutes.

First inorganic matter slurry was prepared by adding a first polymer binder solution including an acryl-based water-dispersed emulsion (Toyo ink Corportion, CSB130) as a polymer binder and a surfactant (FC-4430, Kemis Corporation) to the fluid-based slurry and dispersing them by the sonicator for about 30 minutes.

Thereafter, the first inorganic matter slurry was applied to one surface of a PET release film and dried. The weight ratio of the first inorganic matter particles and the polymer binder was 9:1.

Aqueous slurry having a reduced particle size (D50: 1 µm or less) was prepared by inputting zeolite Y (a silicon aluminum ratio (SAR) of 1.5 or more) as second inorganic matter particles to water, dispersing them, and performing basket milling at 1400 rpm and 1800 rpm for 10 minutes and 50 minutes, respectively.

Second inorganic matter slurry was prepared by adding a second polymer binder solution including an acryl-based water-dispersed emulsion (Toyo ink Corportion, CSB140) as a polymer binder and a surfactant (BYK Corportion, BYK348) to the aqueous slurry 1 hour before coating and performing sonication for 30 minutes.

Thereafter, the second inorganic matter slurry was applied to a surface of a first layer including the first inorganic matter particles and dried. The weight ratio of the second inorganic matter particles and the polymer binder was 92:8.

A dispersion solution was applied to a surface of a second layer including the second inorganic matter particles by using a bar coating method by using a doctor blade and dried by the wind of 50^{°}C by using a heat gun.

Thereafter, a separator having a total thickness of 13 µm was manufactured by removing the PET release film.

### < Example 2>

A separator was manufactured identically with Example 1 except that the aspect ratio of the first inorganic matter particles having a sheet shape in Example 1 is 200.

### <Comparative Example 1>

A separator having a thickness of 14 µm was manufactured by using the same method as that of Example 1, except that one layer was manufactured by adding zeolite Y, that is, the second inorganic matter particles, without the first layer including the first inorganic matter particles having a sheet shape in Example 1.

### <Comparative Example 2>

A separator having a thickness of 11 µm was manufactured by using the same method as that of Example 1, except that one layer was manufactured by adding hexagonal boron nitride (hBN), that is, the first inorganic matter particles having a sheet shape, without the second layer including the second inorganic matter particles in Example 1.

### <Comparative Example 3>

A separator having a thickness of 14 µm was manufactured by using the same method as that of Example 1, except that the aspect ratio of the first inorganic matter particles having a sheet shape in Example 1 is less than 10.

### <Comparative Example 4>

A separator having a thickness of 12 µm was manufactured by using the same method as that of Example 1, except that the aspect ratio of the first inorganic matter particles having a sheet shape in Example 1 is greater than 300.

### <Manufacturing of electrochemical device>

### 1) Manufacturing of positive electrode

Slurry for a positive electrode active material layer having a concentration of 50 wt% of the remaining components except water was prepared by mixing a positive electrode active material (LiNi_{0.8}Mn_{0.1}Co_{0.1}O₂), a conductive material (carbon black), a dispersant (N-methylpyrrolidone, ADC-01, LG Chemical Corporation), and binder resin (PVDF-HFP and PVDF mixed) with water at a weight ratio of 97.5:0.7:0.14:1.66. Next, a positive electrode having a positive electrode active material layer (a thickness of 120 µm) was manufactured by applying the slurry to a surface of an aluminum thin film (a thickness of 10 µm) and drying them.

### 2) Manufacturing of negative electrode

Slurry for a negative electrode active material layer having a concentration of 50 wt% of the remaining components except water was prepared by mixing graphite (natural graphite and artificial graphite mixed), a conductive material (carbon black), a dispersant (polyvinylpyrrolidone, Junsei Chemical Co., Ltd. of Japan), and a binder resin (PVDF-HFP and PVDF mixed) at a weight ratio of 97.5:0.7:0.14:1.66. Next, a negative electrode having a negative electrode active material layer (a thickness of 120 µm) was manufactured by applying the slurry to a surface of a copper thin film (a thickness of 10 µm) and drying them.

### 3) Lamination process

An electrode assembly was obtained by interposing and stacking the separator of each of the Examples and the Comparative Examples between the manufactured negative electrode and the manufactured positive electrode and performing a lamination process. The lamination process was performed under conditions of 70^{°}C and 5.2 MPa by using a hot press for 10 seconds.

### <Experiment Example 1: permeability of separator>

The permeability (Gurlye) of the separator of each of the Examples and the Comparative Examples was measured by an ASTM D-2873 method. A Gurlye value was measured by using Gurley type Densometer (No.158) of Toyoseiki Corporation according to the JIS Gurlye measuring method. The permeability value was indicated as time (second), that is, the permeability that is taken for the air of 100 ml to pass through a cross section of the separator 1 in² under pressure of 12.2 in H₂O.

### <Experiment Example 2: resistance of separator>

A coin cell was manufactured by interposing the separator of each of the Examples and the Comparative Examples between SUSs. As an electrolyte of the coin cell, ethylene carbonate: ethylmethyl carbonate were mixed at 1:2 (a volume ratio), and LiPF₆ having a concentration of 1 M was added. Resistance of each coin cell was measured through the analysis results of electrochemical impedance spectroscopy under conditions of amplitude 10 mV and a scan range of 0.1 Hz to 1 MHz at 25^{°}C by using an analysis device (VMP3, Bio logic science instrument).

### <Experiment Example 3: breakdown voltage of separator>

A voltage at which a short circuit was generated was measured by a Hi-pot tester after placing a separator sample of each of the Examples and the Comparative Examples that was prepared between aluminum jigs (an upper jig having a diameter of 30 mm and a lower jig 50x100 mm). In this case, measuring conditions were set as DC, a current of 0.5 mA, and a voltage increase of 100 V/s (up to 3 kV).

### <Experiment Example 4: performance retention rate of electrochemical device>

In order to perform evaluation on the lifespan of manufactured electrochemical devices including the separators of the Examples and the Comparative Examples, a process of charging each of the electrochemical devices up to 4.35 V at 0.33 C and discharging each electrochemical device up to 2.0 V at 0.33 C was perform by 500 cycles, and an initial capacity and remaining capacity were measured.

### <Experiment Example 5: amount of gas generation of electrochemical device>

In order to measure the amount of gas generated of manufactured electrochemical devices including the separators of the Examples and the Comparative Examples, charging and discharging was once performed on each of the electrochemical devices under 0.1C/0.1C conditions at 25^{°}C, and the amount of gas generated was measured while performing formation. In order to measure the amount of gas generated of a degraded cell, after a cell that was evaluated by 500 cycles as in Experiment Example 4 was fully discharged up to 2.0 V at 0.33 C, and the amount of gas generated of the cell was measured.

### <Experiment Example 6: amount of elution of transition metal of electrochemical device>

In order to measure the amount of elution of transition metal of the negative electrodes of manufactured electrochemical devices including the separators of the Examples and the Comparative Examples, after formation at SOC 30%, charging and discharging tests in which discharging was performed under conditions of a discharging current density of 0.33 C and a discharging voltage of 2.0 V and charging was performed under conditions of a charging current density of 0.33 C, a charging voltage of 4.35 V, and a constant current-constant voltage (CC-CV) were performed 500 times. After the 500 cycle tests, the amount of transition metal that was eluted from the surface that faces the negative electrode was measured.

**[Table 1]**

| | Physical properties of separator | | | | Evaluation of electrochemical device | | | | |
|---|---|---|---|---|---|---|---|---|---|
| | Thickne ss (µm) | Permeabili ty (sec/100cc ) | Resistan ce (Ω) | Breakdo wn voltage (V) | Performan ce retention rate (%/0.33 C 500 cycles) | Amount of gas generat ed (µl) | ICP analysi s of surface that faces negativ e electro de (ppm/50 0 cycles) | | |
| | | | | | | | Ni | Co | Mn |
| Comparati ve Example1 | 14 | 120 | 0.9 | 3650 | 85 | 120 | 70 | <5 | 51 0 |
| Comparati ve Example2 | 11 | 140 | 1.4 | 1670 | 73 | 550 | 17 0 | <5 | 86 0 |
| Comparati ve Example3 | 14 | 125 | 1.0 | 3430 | 80 | 230 | 10 0 | <5 | 68 0 |
| Comparati ve Example4 | 12 | 140 | 1.7 | 2150 | 74 | 210 | 35 | <5 | 29 0 |
| Example 1 | 13 | 130 | 1.0 | 4360 | 83 | 220 | 53 | <5 | 46 0 |
| Example 2 | 13 | 133 | 1.1 | 4120 | 89 | 215 | 42 | <5 | 34 0 |

Referring to Table 1, in Examples 1 and 2 according to embodiments of the present disclosure, the amount of elution of transition metal that was significantly reduced could be seen in the surface that faces the negative electrode of the electrochemical device that was degraded due to the discharging of 500 cycles because a case in which by-products that were not adsorbed by functional inorganic matter particles of the second layer did not passed through the inorganic matter layer having a sheet shape, that is, the first layer, and did not reach up to the surface that faces the negative electrode was increased. An improved performance retention rate of the electrochemical device and a reduced amount of gas generated due to the same effect were also checked.

In contrast, Comparative Example 1 is a self-standing ceramic separator consisting of only second inorganic matter particles capable of adsorbing by-products generated when the electrochemical device was degraded, and showed results in which the amount of elution of transition metal was reduced compared to a common separator in the surface that faces the negative electrode of the electrochemical device that was degraded by the discharging of 500 cycles. Comparative Example 2 is a separator consisting of only inorganic matter particles having a sheet shape, that is, the first inorganic matter particles, and it was expected that by-products accumulated on the surface that faces the negative electrode would be reduced due to a complex path of transition metal ions because the assembly of a denser inorganic matter was possible. However, Comparative Example 2 has a lower level than Comparative Example 1. When the aspect ratio value of the inorganic matter particles having a sheet shape was too small (AR<10) as in Comparative Example 3, Comparative Example 3 showed poor properties in the amount of elution of transition metal of the surface that faces the negative electrode, the performance retention rate of the electrochemical device, and the amount of gas generated because an effect which might be expected due to the use of the inorganic matter particles having a sheet shape was insignificant. When the aspect ratio value of the inorganic matter particles having a sheet shape was too large (AR>300) as in Comparative Example 4, it was checked that the breakdown voltage was significantly reduced and the performance retention rate of the electrochemical device also had a low level because the inorganic matter particles having a sheet shape had a strong property that hinders the durability of the separator.

The self-standing ceramic separator for an electrochemical device according to an embodiment of the present disclosure can be expected to improve performance of the electrochemical device by adsorbing a gas and preventing by-products from being accumulated on the surface that faces the negative electrode when the electrochemical device is degraded because the separator includes a functional inorganic matter and an inorganic matter having a sheet shape.

### <Description of reference numerals>

100: self-standing ceramic separator for electrochemical device
110: first layer
130: second layer
300: negative electrode
500: positive electrode

## Claims

1. A self-standing ceramic separator for an electrochemical device, comprising:
first inorganic matter particles, second inorganic matter particles, and a polymer binder,
wherein the first inorganic matter particles have a sheet shape, and
an aspect ratio of the first inorganic matter particles is 10 or more and 300 or less.

2. The self-standing ceramic separator of claim 1, wherein one surface of the first inorganic matter particles and one surface of the separator are arranged to face each other.

3. The self-standing ceramic separator of claim 1, further comprising:
a first layer in which a weight of the first inorganic matter particles as comprised is greater than a weight of the second inorganic matter particles as comprised; and
a second layer which is provided on one surface of the first layer and in which the weight of the second inorganic matter particles as comprised is greater than the weight of the first inorganic matter particles as comprised.

4. The self-standing ceramic separator of claim 3, wherein a surface that is opposite to the one surface of the first layer is provided to face a negative electrode.

5. The self-standing ceramic separator of claim 1, wherein the first inorganic matter particles comprise one selected from a group consisting of boron nitride, boehmite, kaoline, and a combination of them.

6. The self-standing ceramic separator of claim 1, wherein:
the second inorganic matter particle is a zeolite-based inorganic matter,
the second inorganic matter particle comprises a pore having a diameter of 0.5 nm or more to 0.9 nm or less, and
the pore of the second inorganic matter particle is substituted with metal ions.

7. The self-standing ceramic separator of claim 1, wherein an average particle diameter D50 of the second inorganic matter particles is 1 *µ*m or less.

8. The self-standing ceramic separator of claim 3, wherein a thickness of the second layer is 1 *µ*m or more to 3 *µ*m or less.

9. The self-standing ceramic separator of claim 1, wherein a content of the first inorganic matter particles is 5 parts by weight or more to 10 parts by weight or less with respect to 100 parts by weight of the separator.

10. The self-standing ceramic separator of claim 1, wherein the polymer binder is an acrylic binder, a polyvinylidene-based binder, or a combination of them.

11. The self-standing ceramic separator of claim 1, wherein a thickness of the separator is 7 *µ*m or more to 15 *µ*m or less.

12. The self-standing ceramic separator of claim 1, wherein a permeability of the separator is 170 sec/100 cc or less.

13. The self-standing ceramic separator of claim 1, wherein resistance of the separator is 0.6 Ω or more to 1.2 Ω or less.

14. An electrochemical device comprising a positive electrode; a negative electrode; and the separator of Claim 1, which is interposed between the positive electrode and the negative electrode.
